# EUROPEAN PATENT SPECIFICATION

(11) **EP 3 725 494 B1**
(45) Date of publication and mention of the grant of the patent: **11.10.2023**
(21) Application number: 17934767.9
(22) Date of filing: 15.12.2017
(51) Int. Cl.: B29C 35/04, B29C 55/02, B29C 55/12, F27D 7/02, B29C 55/20, B29L 7/00

(54) **FILM MANUFACTURING DEVICE**
FILMHERSTELLUNGSVORRICHTUNG
DISPOSITIF DE FABRICATION DE FILM

(43) Date of publication of application: 21.10.2020
(73) Proprietor: The Japan Steel Works, Ltd., Tokyo 141-0032 (JP)
(72) Inventor: TOMIYAMA Hideki, Hiroshima-shi, Hiroshima 736-8602 (JP); KATO Kaoru, Hiroshima-shi, Hiroshima 736-8602 (JP)
(74) Representative: Peters, Sebastian Martinus
(86) International application number: PCT/JP2017/045096
(87) International publication number: WO 2019/116534

(56) References cited:
- JP-A- 2007 237 560
- JP-A- 2011 167 923
- JP-A- 2011 167 923
- JP-A- 2013 256 384
- JP-A- 2013 256 384
- JP-U- S6 098 634
- JP-U- S6 098 634
- US-A- 4 622 762

## Description

### Technical Field

The present invention relates to a film manufacturing device.

### Background Art

A biaxially oriented film, as typified by a biaxially oriented polypropylene film, a biaxially oriented polyester film, or the like, is generally manufactured as follows. First, a solid raw material is melted and plasticized by an extruder, and the melted resin material is discharged from a T-die to be shaped into a thin and wide sheet. Subsequently, the discharged resin material is cooled and solidified by a molding roll, and then stretched into a film in both directions by a machine direction stretcher and a transverse direction stretcher.

The transverse direction stretcher described above includes a heat treatment device (a tenter oven) for performing heat treatment of the film. When the film passes through the inside of the tenter oven, it is heated by hot air injected from injection ports provided in ducts. During this process, the film is gripped by clips at both ends in its width direction, and stretched in the width direction by moving the opposite clips such that the interval between them becomes larger.

The tenter oven is divided into a plurality of temperature-controlled zones arranged along the conveying direction of the film. The temperature-controlled zones are respectively adjusted to different temperatures, in each of which, for example, preheating, heating, insulation, or cooling is performed. In each of the temperature-controlled zones, the above-described ducts are arranged above and below the film. The hot air that has been injected from the ducts is blown onto the film, and thereafter flows mainly through the gap between the ducts to be collected from a suction port inside the tenter oven. The collected air is then reheated by a heat exchanger such as a radiator, and fed into the ducts by a blower or a fan for reuse.

A housing that defines each temperature-controlled zone of the tenter oven is made of a thick wall material inside which a heat insulating material is embedded. Therefore, the housing has good insulation and can keep the inside temperature stable. However, the most upstream temperature-controlled zone (an inlet zone) and the most downstream temperature-controlled zone (an outlet zone) are both provided with an opening that communicates between the inside and outside of the housing to allow passage of at least the film. Therefore, in these zones, for example, the pressure in a space surrounded by the ducts located above and below the film and the clips located on both sides thereof becomes higher than the atmospheric pressure, thereby leading to leakage of hot air from the inside to the outside of the housing through the opening. In addition, the occurrence of leakage of hot air causes an inflow of outside air (cold air) into the housing based on the mass conservation law of air inside the housing. Furthermore, particularly in the inlet zone, an accompanying flow occurs due to the conveying of the film, which also causes an inflow of outside air. The accompanying flow increases as the conveying speed of the film increases, and therefore it appears notably in high-speed manufacturing.

Such leakage of hot air and such inflow of outside air may cause non-uniformity of the temperature in each of the inlet and outlet zones, thereby degrading the quality of the film produced. Therefore, for the tenter oven, various measures have been taken to prevent the leakage of hot air and the inflow of outside air. For example, Patent Document 1 describes a method in which a specific duct in a temperature-controlled zone is set at a defined height relative to a surface of a film to prevent an accompanying flow from affecting another zone. Further, Patent Document 2 describes a method in which hot air leaking from a tenter oven is sucked in by a suction device arranged upstream of the tenter oven. Patent Document 3 discloses a tenter oven that continuously passes a sheet-like material through the oven, wherein air is blown by an air nozzle that is arranged outside an oven body towards the sheet-like material either immediately before an inlet of the oven or immediately after an outlet of the oven. Patent document 4 discloses a tenter oven, wherein the tenter oven is provided with a plurality of air ejection nozzles that are arranged in groups within the oven such that they improve a heating efficiency by controlling a flow path of the air ejected by the air ejection nozzles. Patent document 5 discloses a process which comprises passing material in an effectively continuous manner through a gaseous treatment chamber by way of at least one open port. The process further comprises applying a gas curtain across a path of the material to form a buffer zone externally adjacent said port between the chamber interior and the surrounding atmosphere. Patent document 6 discloses a lateral stretching apparatus that comprises a plurality of processing chambers having different fluid temperatures for processing a film. The apparatus is further provided with partition walls that provide a partition between adjacent processing chambers, wherein the partition walls are provided with a shielding plate that extends between the partition wall and the to be processed film in order to block fluid that flows out from an inside of the processing chamber.

### Citation List

### Patent Literature

Patent Literature 1: JP 2014-208456 A
Patent Literature 2: JP 2015-42388 A
Patent Literature 3: JP S60 98634 U
Patent Literature 4: JP 2013 256384 A
Patent Literature 5: US 4 622 762 A
Patent Literature 6: JP 2011 167923 A

### Summary of the Invention

### Technical Problem

As described above, each temperature-controlled zone of the tenter oven has good insulation, and the heater output of the heat exchanger is kept substantially constant at a low value, except that it increases temporarily at start-up. However, due to the leakage of hot air and the inflow of outside air, the heater output in the inlet and outlet zones becomes high as compared with the other zones, which increases the energy consumption. Therefore, even from the viewpoint of energy saving, the leakage of hot air and the inflow of outside air are desired to be prevented.

However, to prevent the inflow of outside air due to the accompanying flow by using the method described in Patent Document 1, it is necessary to practically add a zone including the above-described duct further upstream of the inlet zone. For that reason, this method does not necessarily lead to energy saving of the entire device. On the other hand, the method described in Patent Document 2 is a method for dealing with an increase in leakage of hot air, as a result of being based on the assumption that the inside of the housing is kept at a positive pressure to improve the uniformity of the temperature inside the housing. Therefore, this method does not at all take into account the increased energy consumption due to the increased leakage of hot air.

Accordingly, it is an object of the present invention to provide a film manufacturing device which has high energy efficiency and manufactures a high-quality film.

### Solution to Problem

To achieve the above-described object, a film manufacturing device of the present invention includes: a housing having an opening that communicates between an inside and an outside of the housing; a first air injection unit that is located inside the housing and injects heated air toward a surface of a film being conveyed in a predetermined direction between the inside and the outside of the housing through the opening; and a second air injection unit that is located outside the housing adjacent to the opening and that injects air in a curtain shape in a direction intersecting the predetermined direction toward the surface of the film being conveyed, wherein the second air injection unit is attached to a partition plate fixed to the housing, in accordance with claim 1.

According to the film manufacturing device, the air that is injected in the curtain shape onto the film from the second air injection unit, blocks air from flowing through the opening between the inside and the outside of the housing through. As a result, by a simple structure, the leakage of heated air from the housing and the inflow of outside air into the housing can be prevented to keep the temperature inside the housing uniform without increasing the energy consumption.

### Advantageous Effects of Invention

As described above, according to the present invention, it is possible to provide a film manufacturing device which has high energy efficiency and manufactures a high-quality film.

### Brief Description of the Drawings

FIG. 1 is a schematic perspective view of a film manufacturing device according to an embodiment of the present invention;
FIG. 2 is an enlarged schematic perspective view of a portion of the film manufacturing device of FIG. 1;
FIG. 3 is a schematic perspective view of the inside of the film manufacturing device of this embodiment;
FIG. 4 is a schematic perspective view of an air nozzle constituting a second air injection unit of this embodiment;
FIG. 5 shows simulation result in Example, and plots the three-dimensional velocity distribution of air in an opening plane of a housing;
FIG. 6 shows the simulation results in Example, and plots the two-dimensional temperature distribution of air around an opening of the housing;
FIG. 7 shows simulation result in Comparative Example, and plots the three-dimensional velocity distribution of air in the opening surface of the housing;
FIG. 8 is a diagram showing a simulation result, and plots the two-dimensional temperature distribution of air around the opening of the housing; and
FIG. 9 is a graph showing the time dependence of the heater outputs in Example and Comparative Example.

### Description of Embodiments

Hereinafter, an embodiment of the present invention will be described with reference to the drawings.

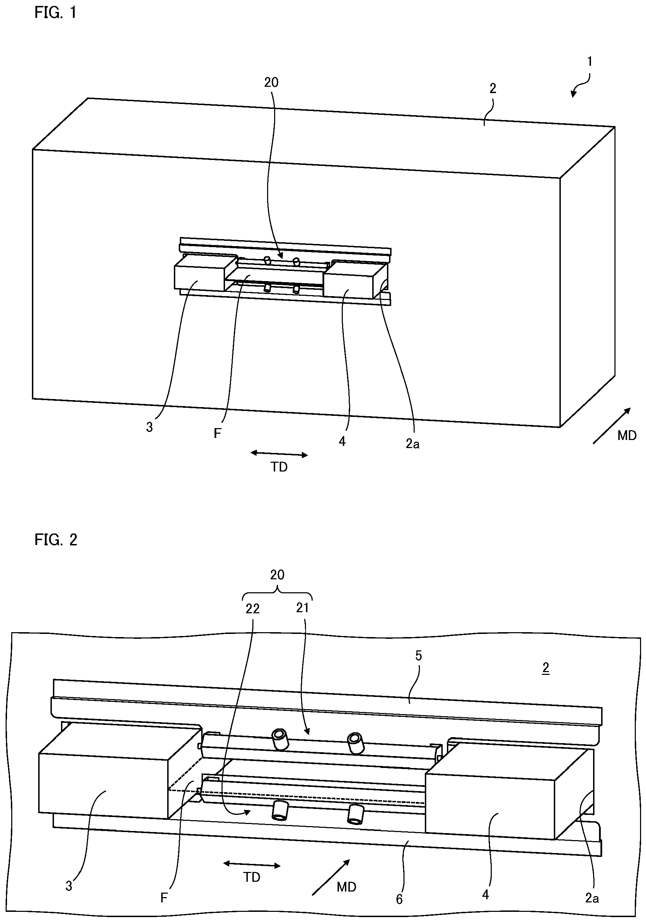

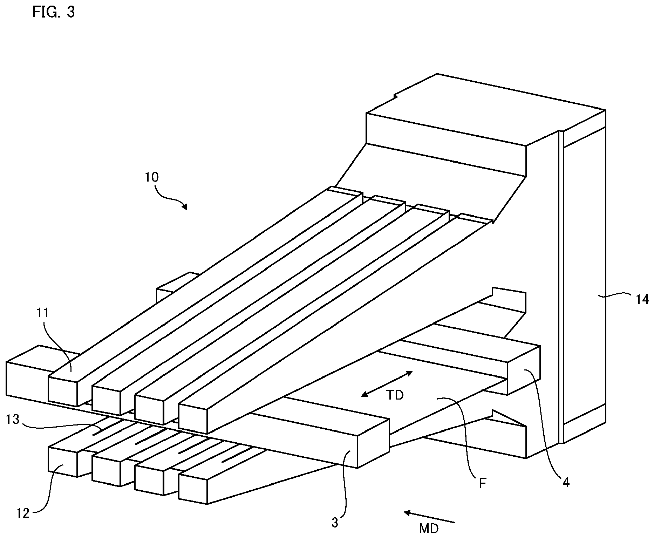

FIG. 1 is a schematic perspective view of a film manufacturing device (a tenter oven) according to an embodiment of the present invention, which is viewed from an upstream side in a conveying direction of a film. FIG. 2 is an enlarged schematic perspective view of a portion of the tenter oven of FIG. 1. In FIG. 2, the film is shown in dashed lines for the sake of clarity. FIG. 3 is a schematic perspective view of a main portion of the tenter oven of this embodiment, which is also viewed from the upstream side in the conveying direction of the film. Hereinafter, the conveying direction of the film will be referred to as the "MD (Machine Direction) direction", and the width direction of the film perpendicular thereto will be referred to as the "TD (Transverse Direction) direction".

Tenter oven 1 is a device for performing heat treatment of film F in a film manufacturing process, and specifically, is a device for simultaneously heating film F being conveyed in the MD direction (a predetermined direction) and stretching it in the TD direction. Tenter oven 1 is divided into a plurality of temperature-controlled zones arranged along the MD direction. The temperature-controlled zones are respectively adjusted to different temperatures, in each of which, for example, preheating, heating, insulation, or cooling is performed. Figs. 1 to 3 show the most upstream zone (an inlet zone) of the temperature-controlled zones.

Tenter oven 1 includes housing 2 defining the inlet zone, a pair of clip covers 3, 4 located inside housing 2, first air injection unit 10 also located inside housing 2, and second air injection unit 20 located outside housing 2.

Housing 2 is arranged such that its front face (an upstream face in the MD direction) and its back face (a downstream face in the MD direction) are both perpendicular to the MD direction. In the front face of housing 2, opening 2a that communicates between the outside and the inside of housing 2 is formed, and in the back face of housing 2, a communication hole (not shown) that communicates between the inside of housing 2 and the inside of a housing adjacent thereto in the MD direction is formed. Film F is conveyed into housing 2 through opening 2a, and is then conveyed into the adjacent housing through the communication hole. Housing 2 is made of a thick wall material inside which a heat insulating material is embedded, and has high insulation performance.

Clip covers 3, 4 are located at both ends of film F in the TD direction, and each of them receives a clip that travels in the MD direction while gripping both ends of film F in the TD direction. Clip covers 3, 4 extend in the MD direction between opening 2a and the communication port of housing 2, and at least the upstream end thereof in the MD direction is exposed to the outside of housing 2 through opening 2a.

First air injection unit 10 includes a plurality of pairs of ducts 11, 12 arranged at predetermined intervals along the MD direction, and ducts 11, 12 of each pair are arranged to face each other across film F. Each of ducts 11, 12 includes, on a side facing film F, injection port 13 for injecting heated air toward the surface of film F. Thus, first air injection unit 10 can heat film F by injecting heated air onto both surfaces of film F being conveyed in the MD direction inside housing 2. The heated air that has been injected onto film F mainly flows through the gap between ducts 11 and 12, and is collected from suction port 14. The collected air is then reheated by a heat exchanger (not shown) such as a radiator, and fed into ducts 11, 12 by a blower machine (not shown), such as a blower or a fan, for reuse. In each of ducts 11, 12, although one injection port 13 is formed into a slit shape in the illustrated embodiment, a plurality of circular injection ports may be formed.

When the heated air is injected onto film F from ducts 11, 12 of first air injection unit 10, the pressure in a conveying space of film F surrounded by ducts 11, 12 and clip covers 3, 4 becomes higher than the atmospheric pressure due to the influence thereof. Therefore, leakage of heated air from the inside to the outside of housing 2 occurs through opening 2a. In addition, the occurrence of leakage of hot air causes an inflow of outside air (cold air) into housing 2 through opening 2a, based on the mass conservation law of air inside housing 2. Such inflow of outside air also occurs due to an accompanying flow generated by the conveyance of film F.

Second air injection unit 20 is provided to prevent the leakage of heated air and the inflow of outside air. Specifically, second air injection unit 20 is located outside housing 2 adjacent to opening 2a and functions to inject air in a curtain shape in a direction intersecting the MD direction toward the surface of film F being conveyed. Thus, second air injection unit 20 creates a so-called air curtain in front of opening 2a (on the upstream side thereof in the MD direction), so that air can be blocked from flowing through opening 2a between the inside and the outside of housing 2. As a result, according to this embodiment, by a simple structure, the leakage of heated air from housing 2 and the inflow of outside air into housing 2 can be prevented without any additional large-scale facilities. Therefore, the temperature inside housing 2 can be kept uniform without increasing the energy consumption, thereby enabling prevention of the deterioration of the quality of the manufactured film.

The air that is injected onto film F from second air injection unit 20 is not necessarily required to be heated, as long as it can prevent the leakage of heated air from housing 2 and the inflow of outside air into housing 2. Outside air at ambient temperatures is preferably injected because unnecessary energy consumption can be prevented.

In this embodiment, second air injection unit 20 is composed of a pair of air nozzles 21, 22 that are arranged to face each other across film F being conveyed and that injects air in the curtain shape onto both surfaces of film F. Air nozzles 21, 22 are respectively attached to partition plates 5, 6 fixed to the front face of housing 2. Specifically, partition plates 5, 6 are arranged above and below opening 2a, each having a portion extending toward film F to cover a portion of opening 2a, and air nozzles 21, 22 are attached to the portions of the plates. Thus, partition plates 5, 6 can not only cover the portions of opening 2a, but also place air nozzles 21, 22 closer to film F, thereby further improving the effect of preventing the leakage of heated air from housing 2 and the inflow of outside air into housing 2. The shapes of the portions of partition plates 5, 6 that extend toward films F (i.e., the portions that cover opening 2a) are not limited to a flat-plate shape as illustrated. For example, to prevent the heated air that has leaked from housing 2 from diffusing upward or downward, the tips of partition plates 5, 6 that face film F may be bent to extend parallel to film F. In other words, the tips may be bent in a direction away from opening 2a along the MD direction.

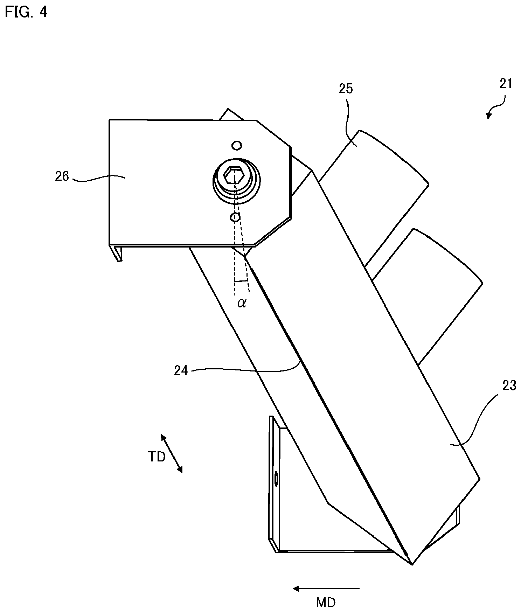

Hereinafter, a detailed configuration of the air nozzles of this embodiment will be described. The pair of air nozzles constituting the second air injection unit has the same configuration and is arranged symmetrically to each other with respect to film F. Therefore, only the configuration of one of the air nozzles will be described below. FIG. 4 is a schematic perspective view of the air nozzle of this embodiment.

Air nozzle 21 includes square-cylinder-shaped main body 23, injection slit 24 formed on a ridge of main body 23, air supply port 25 provided on a side face of main body 23, and a pair of brackets 26 attached to both ends of main body 23 in the longitudinal direction thereof. Injection slit 24 is formed on the ridge of main body 23 that faces film F, and can inject air in the curtain shape in the radial direction of main body 23. Air supply port 25 is provided for supplying air to be injected from injection slit 24. The pair of brackets 26 is provided for fixing main body 23 to housing 2 and is attached to partition plate 5 fixed to the front face of housing 2.

Air nozzle 21 is positioned to housing 2 such that injection slit 24 extends along the TD direction. Thus, air nozzle 21 can inject air in the curtain shape along the TD direction in front of opening a, thereby enabling effective prevention of the leakage of heated air from housing 2 and the inflow of outside air into housing 2.

Further, air nozzle 21 is positioned to housing 2 such that it injects air in the direction away from opening 2a along the MD direction with respect to a direction perpendicular to the surface of film F. In other words, air nozzle 21 is positioned to housing 2 such that the angle α of injected air relative to the direction perpendicular to the surface of film F is inclined toward the upstream side in the MD direction. This allows the component of the air flow injected from air nozzle 21, whose direction is opposite to the direction of the accompanying flow (the MD direction), to be increased. As a result, as compared with a case where air is injected perpendicular to the surface of film F, the inflow of outside air into housing 2 due to the accompanying flow can be particularly effectively prevented. For example, the angle α of air injected from air nozzle 21 is preferably adjustable by rotatably attaching main body 23 to brackets 26 about its longitudinal axis. Thus, air nozzle 21 can inject air at an arbitrary angle relative to the direction perpendicular to the surface of film F, in response to the conveying speed of film F, i.e., in response to the amount of inflow of outside air due to the accompanying flow, thereby enabling more effective prevention of the inflow of outside air.

In this embodiment, the pair of air nozzles 21, 22 is provided as second air injection unit 20, the number of air nozzles, i.e., the number of injection slits is not limited to this. For example, if the conveying speed of the film is high and the amount of inflow of outside air due to the accompanying flow is very large, a plurality of pairs of air nozzles may be arranged along the MD direction to more reliably prevent the inflow of outside air. Alternatively, each of the pair of air nozzles may include a plurality of injection slits formed along the MD direction.

Further, to achieve an additional energy-saving effect, the air nozzles as the second air injection unit may also be provided at the opening of the housing that defines the most downstream zone (an outlet zone), in addition to the most upstream zone (the inlet zone) as in this embodiment. In that case, in view of the influence by the accompanying flow, it is considered preferable that the angle of air injected from the air nozzle is inclined toward the upstream side in the MD direction (a direction close to the opening). However, the injection of air in the direction close to the opening leads to a concern that the air itself may flow into the housing through the opening and adversely affect the uniformity of the temperature inside the housing. Therefore, if the air nozzle is installed in the outlet zone, the angle of air injected from the air nozzle is preferably inclined toward the downstream side of the MD direction (a direction away from the opening).

### (Example)

To confirm the effects of the present invention, the flow of air through opening 2a of housing 2 and the temperature distribution of air around opening 2a were analyzed by simulations. The results of the analysis will be described below.

The simulations were performed for tenter oven 1 of FIGS. 1 to 4 under the following conditions. The width of film F (the distance between clip covers 3 and 4) was set to 800 mm, the height position of air nozzles 21, 22 relative to the surface of film F was set to 60 mm, the length of injection slit 24 was set to 700 mm, and the angle α of air injected from air nozzles 21, 22 was set to 20°. Further, the conveying speed of film F was set to 50 m/min, the temperature inside housing 2 was set to 150°C, and the temperature and the speed of air injected from air nozzles 21, 22 were set to 20°C and 5 m/s, respectively.

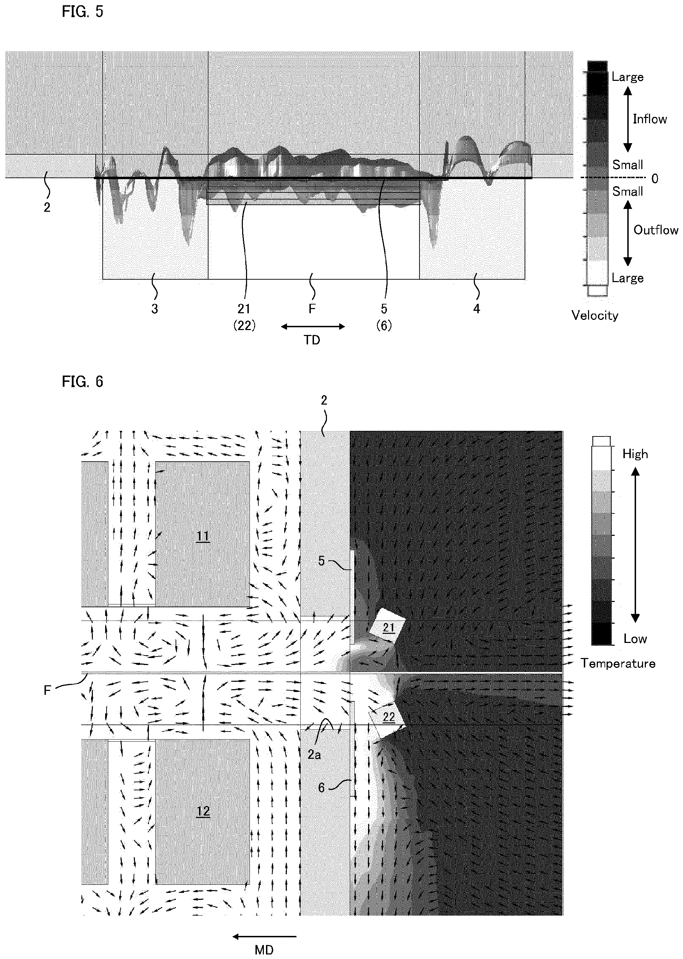

FIGS. 5 and 6 show the simulation results in Example. Specifically, FIG. 5 plots the three-dimensional velocity distribution of air in an opening plane of the housing (a plane defined by the periphery of the upstream side of the opening in the MD direction), which is viewed from the direction perpendicular to the surface of the film. In FIG. 5, the opening plane of the housing is indicated by a thick line. FIG. 6 plots the two-dimensional temperature distribution of air around the opening of the housing in a plane passing through the center of the TD direction of the film and perpendicular to the TD direction. In FIG. 6, air flows are also indicated by arrows for reference.

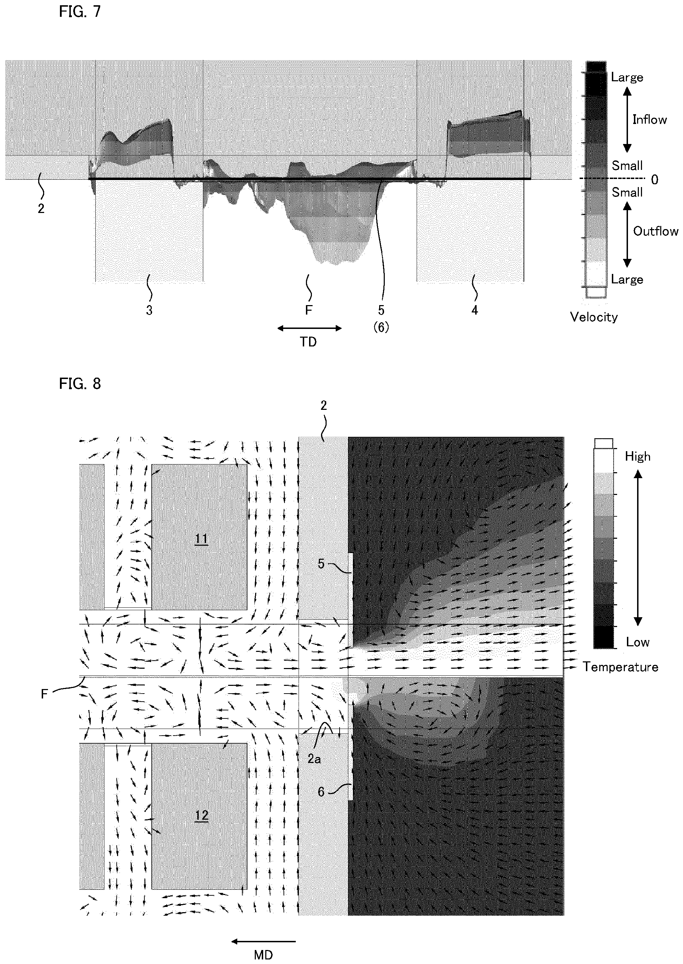

On the other hand, as Comparative Example, simulations were performed under the same conditions as Example except that air nozzles 21, 22 are not provided in tenter oven 1 of FIGS. 1 to 4. FIGS. 7 and 8 show the simulation results in Comparative Example, which respectively correspond to FIGS. 5 and 6.

From the simulation results as shown in FIGS. 5 to 8, it can be seen that both the velocity distribution of air in the opening plane of housing 2 and the temperature distribution of air around opening 2a vary greatly depending on the presence or absence of air nozzles 21, 22. In other words, it can been seen that, in Example (FIGS. 5 and 6), air is effectively blocked from flowing through opening 2a between the inside and the outside of housing 2, and the air that is injected in the curtain shape from air nozzles 21, 22 works very effectively, as compared with Comparative Example (FIGS. 7 and 8).

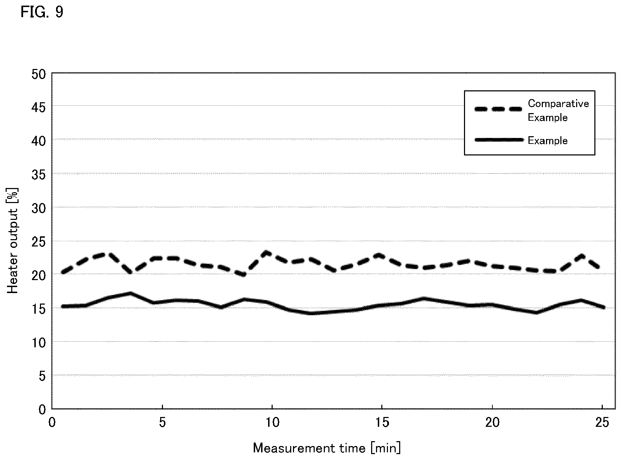

Furthermore, as Example, in addition to the simulations described above, the film was manufactured under stable molding conditions by using tenter oven 1 of FIGS. 1 to 4, and the heater output of the heat exchanger (the ratio of the output to the maximum output of the heater) was measured continuously for 25 minutes. FIG. 9 shows the measurement results (the heater output as a function as the measurement time). FIG. 9 also shows, as Comparative Example, measurement result obtained under the same conditions as Example except that air nozzles 21, 22 are not provided.

As shown in FIG. 9, the heater output in Example remained at a lower level than that in Comparative Example, and the average value thereof was 15.48% in Example, whereas it was 21.49% in Comparative Example. Therefore, it was confirmed that, in Example, the air that is injected in the curtain shape from air nozzles 21, 22 blocks air from flowing through opening 2a between the inside and the outside of housing 2, thereby reducing the heater output. The difference in heater output between Example and Comparative Example (about 6%) is several kWh in terms of electric energy, and is expected to have a significant energy saving effect in the film manufacturing device (the tenter oven) based on the assumption that it is continuously operated regardless of the time of day or night.

### Reference Signs List

- 1: Tenter oven
- 2: Housing
- 3, 4: Clip covers
- 5, 6: Partition plates
- 10: First air injection unit
- 11, 12: Ducts
- 13: Injection port
- 14: Suction port
- 20: Second air injection unit
- 21, 22: Air nozzles
- 23: Main body
- 24: Injection slit
- 25: Air supply port
- 26: Brackets

## Claims

1. A film manufacturing device (1) comprising:
a housing (2) having an opening that communicates between an inside and an outside of the housing;
a first air injection unit (10) that is located inside the housing (2) and that injects heated air toward a surface of a film (F) being conveyed in a predetermined direction (MD) between the inside and the outside of the housing through the opening; and
a second air injection unit (20) that is located outside the housing (2) adjacent to the opening and that injects air in a curtain shape in a direction intersecting the predetermined direction (MD) toward the surface of the film (F) being conveyed,
wherein the second air injection unit (20) is attached to a partition plate (5, 6) fixed to the housing (2).

2. The film manufacturing device (1) according to claim 1, wherein the second air injection unit (20) includes a pair of injection slits (24) that is arranged to face each other across the film (F) being conveyed and injects air onto both surfaces of the film (F) being conveyed.

3. The film manufacturing device (1) according to claim 1, wherein the second air injection unit (20) includes a plurality of pairs of injection slits (24) arranged along the predetermined direction, and the injection slits of each pair of the pairs of injection slits are arranged to face each other across the film (F) being conveyed and inject air onto both surfaces of the film (F) being conveyed.

4. The film manufacturing device (1) according to claim 2 or 3, wherein each of the injection slits (24) extends in a width direction (TD) of the film (F) perpendicular to the predetermined direction (MD).

5. The film manufacturing device (1) according to any one of claims 1 to 4, wherein the second air injection unit (20) injects air in a direction away from the opening along the predetermined direction (MD) with respect to a direction perpendicular to the surface of the film (F) being conveyed.

6. The film manufacturing device (1) according to any one of claims 1 to 5, wherein the second air injection unit (20) injects outside air onto the surface of the film (F) being conveyed.

7. The film manufacturing device (1) according to claim 1, wherein the partition plate (5, 6) includes a portion extending toward the film (F) being conveyed to cover a portion of the opening, and the second air injection unit (20) is attached to the portion of the partition plate (5, 6).

8. The film manufacturing device (1) according to claim 7, wherein a tip of the portion of the partition plate (5, 6) is bent in a direction away from the opening along the predetermined direction (MD).

## Patentansprüche

1. Eine Filmherstellungsvorrichtung (1) umfassend:
ein Gehäuse (2) mit einer Öffnung, die etwas zwischen einer Innenseite und einer Außenseite des Gehäuses überträgt,
eine erste Luftzufuhreinheit (10), die innerhalb des Gehäuses (2) angeordnet ist, und die erwärmte Luft in Richtung auf eine Oberfläche eines Films (F), der in einer vorbestimmten Richtung (MD) zwischen der Innenseite und der Außenseite des Gehäuses durch die Öffnung befördert wird, zuführt, und
eine zweite Luftzufuhreinheit (20), die außerhalb des Gehäuses (2) benachbart zu der Öffnung angeordnet ist, und die Luft in Form eines Vorhangs in einer Richtung zuführt, die sich mit der vorbestimmten Richtung (MD) in Richtung auf die Oberfläche des Films (F), der befördert wird, überschneidet,
wobei die zweite Luftzufuhreinheit (20) an einer Abtrennplatte (5, 6) angebracht ist, die an dem Gehäuse (2) fixiert ist.

2. Die Filmherstellungsvorrichtung (1) gemäß Anspruch 1, wobei die zweite Luftzufuhreinheit (20) ein Paar von Zuführschlitzen (24) umfasst, das so angeordnet ist, dass sie über dem Film (F), der befördert wird, einander gegenüberstehen und Luft auf beide Oberflächen des Films (F), der befördert wird, zuführen.

3. Die Filmherstellungsvorrichtung (1) gemäß Anspruch 1, wobei die zweite Luftzufuhreinheit (20) eine Vielzahl von Paaren von Zuführschlitzen (24) umfasst, die entlang der vorbestimmten Richtung angeordnet sind, und die Zuführschlitze jedes Paars der Paare von Zuführschlitzen so angeordnet sind, dass sie über dem Film (F), der befördert wird, einander gegenüberstehen und Luft auf beide Oberflächen des Films (F), der befördert wird, zuführen.

4. Die Filmherstellungsvorrichtung (1) gemäß Anspruch 2 oder 3, wobei jeder der Zuführschlitze (24) sich in einer Richtung der Breite (TD) des Films (F) senkrecht zu der vorbestimmten Richtung (MD) erstreckt.

5. Die Filmherstellungsvorrichtung (1) gemäß einem der Ansprüche 1 bis 4, wobei die zweite Luftzufuhreinheit (20) Luft in einer Richtung zuführt, die entlang der vorbestimmten Richtung (MD) in Bezug auf eine Richtung senkrecht zu der Oberfläche des Films (F), der befördert wird, von der Öffnung wegführt.

6. Die Filmherstellungsvorrichtung (1) gemäß einem der Ansprüche 1 bis 5, wobei die zweite Luftzufuhreinheit (20) Außenluft auf die Oberfläche des Films (F), der befördert wird, zuführt.

7. Die Filmherstellungsvorrichtung (1) gemäß Anspruch 1, wobei die Abtrennplatte (5, 6) einen Anteil umfasst, der sich in Richtung auf den Film (F), der befördert wird, erstreckt, um einen Teil der Öffnung abzudecken, und wobei die zweite Luftzufuhreinheit (20) an dem Teil der Abtrennplatte (5, 6) angebracht ist.

8. Die Filmherstellungsvorrichtung (1) gemäß Anspruch 7, wobei eine Spitze des Anteils der Abtrennplatte (5, 6) in eine Richtung weg von der Öffnung entlang der vorbestimmten Richtung (MD) gebogen ist.

## Revendications

1. Dispositif de fabrication (1) de film comprenant :
un boîtier (2) présentant une ouverture qui fait communiquer un intérieur et un extérieur du boîtier ;
une première unité d'injection d'air (10) qui est située à l'intérieur du boîtier (2) et qui injecte de l'air chauffé vers une surface d'un film (F) transporté dans une direction prédéterminée (MD) entre l'intérieur et l'extérieur du boîtier par l'ouverture ; et
une deuxième unité d'injection d'air (20) qui est située à l'extérieur du boîtier (2) de manière adjacente à l'ouverture et qui injecte de l'air sous forme de rideau dans une direction coupant la direction prédéterminée (MD) vers la surface du film (F) qui est transporté,
dans lequel la deuxième unité d'injection (20) d'air est fixée à une plaque de séparation (5, 6) fixée au boîtier (2).

2. Dispositif de fabrication (1) de film selon la revendication 1, dans lequel la deuxième unité d'injection d'air (20) comporte une paire de fentes d'injection (24) qui sont disposées l'une en face de l'autre à travers le film (F) transporté et qui injectent de l'air sur les deux surfaces du film (F) transporté.

3. Dispositif de fabrication (1) de film selon la revendication 1, dans lequel la deuxième unité d'injection d'air (20) comporte une pluralité de paires de fentes d'injection (24) agencées dans la direction prédéterminée, et les fentes d'injection de chaque paire de paires de fentes d'injection sont agencées pour se faire mutuellement face à travers le film (F) transporté et injecter de l'air sur les deux surfaces du film (F) transporté.

4. Dispositif de fabrication (1) de film selon la revendication 2 ou 3, dans lequel chacune des fentes d'injection (24) s'étend dans une direction de largeur (TD) du film (F) perpendiculairement à la direction prédéterminée (MD).

5. Dispositif de fabrication (1) de film selon l'une quelconque des revendications 1 à 4, dans lequel la deuxième unité d'injection d'air (20) injecte de l'air dans une direction opposée à l'ouverture le long de la direction prédéterminée (MD) par rapport à une direction perpendiculaire à la surface du film (F) transporté.

6. Dispositif de fabrication (1) de film selon l'une quelconque des revendications 1 à 5, dans lequel la deuxième unité d'injection d'air (20) injecte de l'air extérieur sur la surface du film (F) transporté.

7. Dispositif de fabrication (1) de film selon la revendication 1, dans lequel la plaque de séparation (5, 6) comporte une partie s'étendant vers le film (F) transporté pour couvrir une partie de l'ouverture, et la deuxième unité d'injection d'air (20) est fixée à la partie de la plaque de séparation (5, 6).

8. Dispositif de fabrication (1) de film selon la revendication 7, dans lequel une pointe de la portion de la plaque de séparation (5, 6) est pliée dans une direction opposée à l'ouverture le long de la direction prédéterminée (MD).
